# EUROPEAN PATENT SPECIFICATION

(11) **EP 1 881 387 B1**
(45) Date of publication and mention of the grant of the patent: **28.08.2013**
(21) Application number: 06015017.4
(22) Date of filing: 19.07.2006
(51) Int. Cl.: G05B 23/02

(54) **A method and a device for monitoring the condition of a turbo machinery component**
Verfahren und Gerät zur Zustands-Überwachung von Turbinenkomponenten.
Procédé et dispositif de surveillance d' état d'un component d'une turbine.

(43) Date of publication of application: 23.01.2008
(73) Proprietor: Siemens Aktiengesellschaft, 80333 München (DE)
(72) Inventor: Wilbraham, Nigel, DY8 5QZ Wordsley West Midland (GB)

(56) References cited:
- US-B1- 6 175 111

## Description

The present invention relates to a method and a device for monitoring the condition of a turbo machinery component exposed to an oxidising and/or corrosive and/or erosive gas, during operation of the turbo machinery and, in particular, to a method and a device for monitoring the condition of a gas turbine component during operation of the gas turbine.

The operation of any gas turbine results in the degradation of turbine components through oxidation and/or corrosion and/or erosion damage. The life and the strength of these components are limited. This process is a generic one for all gas turbines. Moreover, similar degradation effects can be found in other turbo machinery, such as, e.g. compressors, steam turbines, turbochargers, etc.

Often, the turbine components are monitored for damages so as to be refurbished in due time.

SU 123 9373 A describes a device for monitoring rotor blades of a steam turbine using a semiconductor converter situated on an insulated insert to convert charges on steam turbine blades into voltage. The charges accumulate on the blade when steam is supplied to the turbine and the rotor rotates. These charges create an electrical field which in turn induces charges in the semiconductor converter. Output signals from the semiconductor converter are processed and output to an indicator which shows correct or incorrect conditions, bent or eroded blades, layers of dirt, etc.

A monitoring of the integrity of turbo machinery components, such as gas turbine components, while the turbo machinery is in operation can also be done through the use of thermocouples, infra-red pyrometers, and even fluorescent phosphor coatings. However, all these techniques require thermocouples or optical access to often highly complex parts deep within rotational parts of gas turbines.

Furthermore it is known from US 6,175,111 B1 that components of turbine generators can be monitored whether deterioration of components inside the turbine generator occurred by measuring organic substances within the gas inside the turbine generator. For this a hydrogen gas is guided to a power instrument line and then introduced into a container to be ionised. Between two electrodes then the value of an electric current is detected and compared to a previously stored reference value. If the values differ this may be an indication that components may be overheated inside the turbine generator.

It is an objective of the present invention to provide a method for monitoring the condition of a gas turbine component which can be performed in situ, i.e. during the operation of the gas turbine, and in a reliable and simple way as well as a device for performing the method.

This objective is solved by a method according to claim 1 and a monitoring device according to claim 6. The dependent claims describe advantageous developments of the invention.

The inventive method for monitoring the condition of a turbo machinery component exposed to an oxidising and/or corrosive and/or erosive gas during operation of the turbine machinery comprises the step of monitoring a current flow from the component through the gas to an electrode being electrically isolated from the component. The electrode may either be charged to a polarity opposite to that of the component or grounded. In the context of the invention expression "erosive gas" shall mean a gas carrying solid particles. The solid particles will cause erosion upon impact on the turbo machinery component.

The degradation of the turbo machinery components, e.g. gas turbine components, is made visible by the use of electrical charges. During any degradation in the component surface or its finish, the irregularity of the surface will increase and generate points where the local electron charge density increases. This increase will eventually lead to a corona discharge through the oxidising and/or corrosive and/or erosive gas which can be measured as a current flow the magnitude of which depends on the number of corona discharges which, in turn, depends on the condition of the component's surface. Thus, a measurement of the current flow allows for monitoring the surface condition.

In a similar way, for a component coated with an electrically isolating coating, like it often is, e.g., the case for gas turbine vanes being coated with ceramic thermal barrier coatings, the condition of the coating can be monitored. When, due to oxidation and/or corrosion and/or erosion, spallings occur in the coating which expose regions of the component's electrically conductive base material discharges can emerge from the exposed regions leading to a current flow through the oxidising and/or corrosive and/or erosive gas the magnitude of which depends on the number of exposed base material areas. Thus, the condition of the coating can be monitored by monitoring the current flow through the oxidising and/or corrosive and/or erosive gas. The inventive method can be performed during operation of the gas turbine.

The current flow can be monitored by electrically charging the component to a fixed level, and monitoring the current needed to charge the component to said fixed level. In order to keep the surface charged on the fixed level, a current is needed which increases with increasing number of corona discharges. Therefore, by monitoring the current needed for charging the surface to the fixed level, the condition of the surface can be monitored. The increase in the current flow, which can be seen in the charging circuit, is related, in particular proportional, to the total damage of the component's surface. The current flow needed to keep the charging can be indicated to the user and manufacturer as a component life reduction. The current flow can be monitored continually or intermittently.

The inventive method is particularly suitable for monitoring the condition of compressor components, steam turbine components and gas turbine components, such as, e.g., combustor components, turbine vanes or turbine blades. For example, the leading edges of nozzle guide vanes are exposed to the hot combustion products supplied from the combustion chamber of the gas turbine, during operation of the gas turbine. The nozzle guide vanes are, therefore, particularly susceptible to erosion generating an uneven surface which is rough and pitted. The inventive method can therefore advantageously be applied to nozzle guide vanes of gas turbines. In compressors, the method could, e.g., be used to detect when an abrasive material on the casing has been rubbed off by the tip of the blades or has lost contact with the base material due to corrosion.

An inventive monitoring device for monitoring the condition of a turbo machinery component exposed to an oxidising and/or corrosive and/or erosive gas comprises
- at least one charging circuit electrically connected to the component,
- an electrode being electrically isolated from the component and
- a current monitor for monitoring a current flow from the component to the electrode trough the gas. The inventive monitoring device is, in particular, adapted to perform the inventive method and thus provides the advantages in monitoring the component's condition, as they have been discussed with respect to the inventive method.

The turbo machinery component may in particular be a compressor component, a steam turbine component or a gas turbine component, such as, e.g., a combustor component, a turbine vane or a turbine blade.

In an advantageous development of the monitoring device the charging circuit may comprise a charge supply unit which is designed such as to charge the component to a set level. The current monitor is then located in the charging circuit. By this development it is not necessary to monitor the current flow through the oxidising and/or corrosive and/or erosive gas itself but it can be measured through the charging circuit. The current flow through the charging circuit represents the current needed to replace the charges which have escaped from the component to form the current through the oxidising and/or corrosive and/or erosive gas.

In a special implementation of the inventive monitoring device the gas turbine component is a turbine vane which is held by at least one first rail and at least one second rail. In particular, nozzle guide vanes of gas turbines are sometimes mounted inside a gas turbine by clamping them between two sets of rails. By using such rails for electrically charging the component there is no need to attach extra electrical lines to the nozzle guide vanes. In this implementation, the charge supply unit comprises a first pole and a second pole the first pole being electrically connected to the turbine vane via the at least one first rail. The electrode is formed by the at least one second rail which is connected to the second pole of the power supply unit or grounded. The second rail is electrically isolated from the first rail and the turbine vane. As an isolating layer for electrically isolating the second rail from the turbine vane, a ceramic coating can be used. In principle both rails may have a ceramic coating provided that at least one specific region of the rail which shall be in electrical contact with the turbine vane is free from the coating so that an electrical contact between the first rail and the component can be assured.

Further features, properties and advantages of the present invention will become clear from the following description of embodiments of the invention in conjunction with the accompanying drawings.

Same or similar parts are designated in the Figures by the same reference numerals.

Figure 1 schematically shows a monitoring device according to the present invention.

Figure 2 schematically shows a circuit diagram corresponding to the monitoring device of Figure 1.

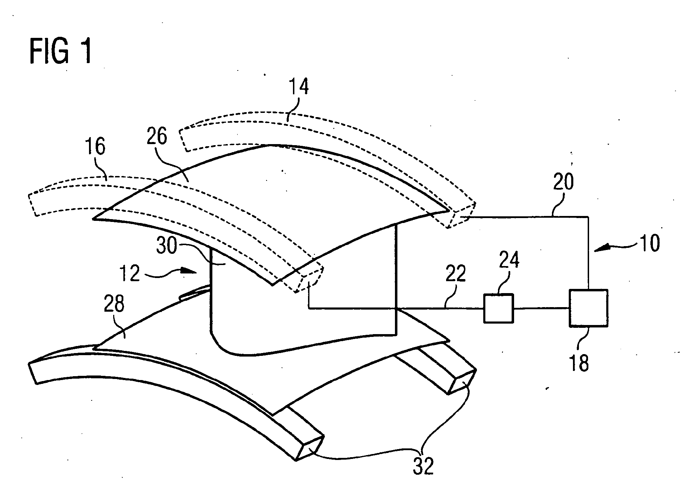

Figure 1 schematically shows a monitoring device according to the present invention. The monitoring device 10 is used for monitoring the condition of the surface of a nozzle guide vane 12 as a component. The monitoring device 10 comprises a charging circuit and a current monitor. The charging circuit comprises a first rail 14 and a second rail 16 which are connected to a power supply unit 18, which represents a charge supply unit, by a first line 20 and by a second line 22, respectively. The current monitor is depicted as an amperemeter 24. The amperemeter 24 is interconnected between the second rail 16 and the power supply unit 18.

The nozzle guide vane 12 comprises a first platform 26 forming a top part, a second platform 28 forming a bottom part and an airfoil portion 30 extending between the first platform 26 and the second platform 28.

The first platform 26 is in electrical and physical contact with the first rail 14 and isolated from the second rail 16 by a ceramic layer (not shown) coating the second rail 16.

The airfoil portion 30, which is formed in one piece with the first platform 26 and the second platform 28, serves to lead the combustion products flowing out of one or more combustors of a gas turbine engine in an optimal manner to turbine blades (not shown) of the gas turbine.

The second platform 28 is fixed to a third rails 32 and a fourth rail 33, which support the nozzle guide vane 12. In the present embodiment, third rail 32 and the fourth rail 33 are electrically isolated from the second platform 28 by a ceramic layer (not shown) coating each third rail 32. However, the third rail and the fourth rail 33 could be designed analogue to the rails to which the first platform is fixed so as to form a second, parallel charging circuit. They can be connected to the same power supply unit 18 and the same amperemeter 24 as the first and second rails. Alternatively, they can be provided with a power supply unit and an amperemeter on their own in a way analogue to the rails connected to the first platform 26.

During operation of the gas turbine, the condition of the nozzle guide vane 12 is monitored by the monitoring device 10. The first rail 14 is charged electrically by the power supply unit 18 by means of the first line 20. The second rail 16 is electrically charged by the power supply unit 18 by means of the second line 22 to the polarity being opposite to the polarity of the first rail 14. Alternatively, the second rail 16 may be grounded.

As the first rail 14 is charged electrically, the nozzle guide vane 12 comprising a metal or a metal alloy is also charged electrically. Irregularities in uncoated surface areas of the nozzle guide vane 12 lead to points where the local electron charge density and therefore the strength of the electrical field produced by the charges increases. When a surface defect reaches a certain level, an electrical corona discharge occurs between the vane's surface and the second rail 16, which in turn generates an increase in the current flow seen in the charging circuit. This increase is proportional to the damage on the surface of the nozzle guide vane 12. Therefore, by monitoring the current needed to keep a fixed charging of the surface upright by use of the amperemeter 24, the condition of the vane's surface can be monitored and indicated to the user of the gas turbine.

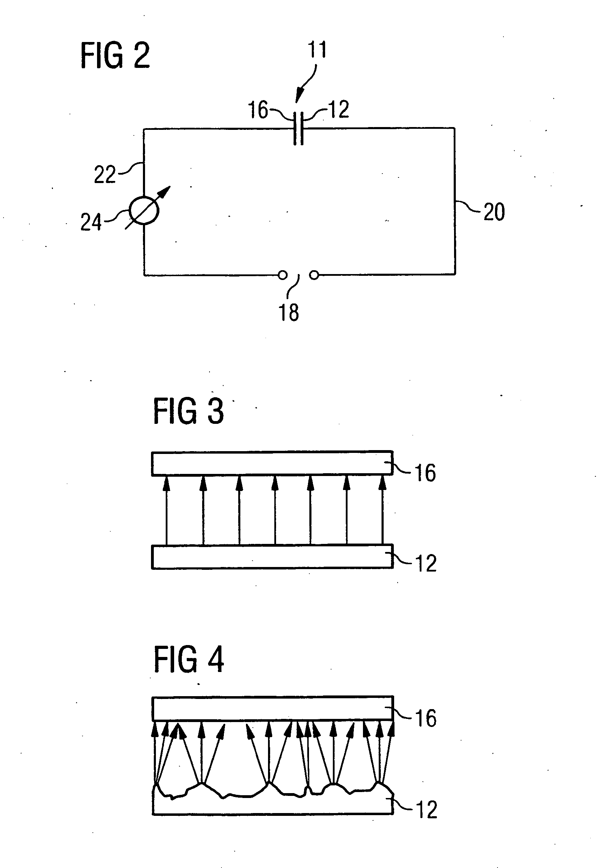

Figure 2 schematically shows an equivalent circuit corresponding to the monitoring device of Figure 1. The equivalent circuit comprises a capacitor 11, the capacitor plates of which represent the component 12 and the second rail 16, which is electrically isolated from the component 12. The capacitor plates are connected to opposite poles of a power supply unit 18 by electric lines 20, 22. The line 22, which connects the capacitor plate 16, representing the second rail, to the power supply unit 18, comprises the amperemeter 24 for measuring the current flowing in the equivalent circuit. Although the amperemeter 24 is provided in the line 22 it may as well be provided in the line 20.

When the surface condition of the component 12 degrades, this leads to a roughening of the surface which in turn leads to spots at which the electrical field of the condensator formed by the component and the second rail locally increases. If this increase reaches a certain level a local corona discharge between the capacitor plates, i.e. between the component 12 and the second rail 16, occurs which closes the equivalent circuit shown in Figure 2 so that a current flow can be measured by the amperemeter 24.

The occurrence of the corona discharge is depicted schematically in Figures 3 and 4. Figure 3 shows the capacitor plates 12, 16 of Figure 2 where the surface of the component 12 is undamaged. In this case, a relatively modest electrical field extends between the component 12 and the second rail 16. When a certain degree of damage of the component's 12 surface is reached, as schematically shown in Figure 4, the electrical field locally increases considerably at surface peaks 15 which leads to an escape of electrons from the peak 15 which are then captured by the second rail 16. By this effect the current flows from the component 12 to the second rail 16 which closes the equivalent circuit shown in Figure 2.

## Claims

1. A method for monitoring the condition of a turbo machinery component (12) exposed to an oxidising and/or corrosive and/or erosive gas during operation of the turbo machinery, comprising the step of monitoring a current flow from the component (12) through the gas to an electrode being electrically isolated from the component (12),
**characterised in that**
the current is monitored by electrically charging the component (12) to a fixed level, and monitoring the current needed to charge the component (12) to said fixed level.

2. The method, as claimed in claim 1, in which the electrode is charged to the opposite polarity compared to the component (12).

3. The method, as claimed in claim 1, in which the electrode is grounded.

4. The method, as claimed in any of the claims 1 to 3, wherein the turbo machinery is a gas turbine and turbo machinery component (12) is a gas turbine component.

5. The method, as claimed in claim 4, wherein the gas turbine component is a combustor component, a turbine vane or a turbine blade.

6. A monitoring device (10) for monitoring the condition of a turbo machinery component (12) exposed to an oxidising and/or corrosive and/or erosive gas comprising
- at least one charging circuit electrically connected to the component (12) for electrically charging the component (12) to a fixed level,
- an electrode being electrically isolated from the component (12) and
- a current monitor (24) for monitoring a current flow from the component (12) to the electrode (16) through the gas by monitoring the current needed to charge the component (12) to said fixed level.

7. The monitoring device (10), as claimed in claim 6, wherein the charging circuit comprises a charge supply unit (18) which is designed such as to charge the component (12) to a set level, and in which the current monitor is located in the charging circuit.

8. The monitoring device (10), as claimed in claim 6 or 7, wherein the turbo machinery component (12) is a gas turbine component.

9. The monitoring device (10), as claimed in claim 8, wherein the gas turbine component is a combustor component, a turbine vane or a turbine blade.

10. The monitoring device (10), as claimed in claim 9, wherein
- the gas turbine component is a turbine vane (12) which is held by at least one first rail.(14) and at least one second rail (16)
- the charge supply unit (18) comprises a first pole and a second pole the first pole being electrically connected to the turbine vane (12) via the at least one first rail (14),
and
- the electrode is formed by the at least one second rail (16) the second rail (16) being connected to the second pole of the power supply unit (18) or grounded and electrically isolated from the first rail (14) and the turbine vane (12).

11. The monitoring device (10), as claimed in claim 10, wherein the second rail (16) is isolated from the turbine vane (12) by a ceramic coating.

## Patentansprüche

1. Verfahren zur Überwachung des Zustands einer Turbomaschinenkomponente (12), die während des Betriebs der Turbomaschine einem oxidierenden und/oder korrosiven und/oder erosiven Gas ausgesetzt ist, welches den Schritt des Überwachens eines Stromflusses von der Komponente (12) durch das Gas hindurch zu einer Elektrode, die von der Komponente (12) elektrisch isoliert ist, umfasst,
**dadurch gekennzeichnet, dass**
der Strom überwacht wird, indem die Komponente (12) bis zu einem festgelegten Pegel elektrisch aufgeladen wird und der Strom überwacht wird, der benötigt wird, um die Komponente (12) bis zu diesem festgelegten Pegel aufzuladen.

2. Verfahren nach Anspruch 1, wobei die Elektrode auf die entgegengesetzte Polarität wie die Komponente (12) aufgeladen wird.

3. Verfahren nach Anspruch 1, wobei die Elektrode geerdet wird.

4. Verfahren nach einem der Ansprüche 1 bis 3, wobei die Turbomaschine eine Gasturbine ist und die Turbomaschinenkomponente (12) eine Gasturbinenkomponente ist.

5. Verfahren nach Anspruch 4, wobei die Gasturbinenkomponente eine Brennkammerkomponente, eine Turbinenleitschaufel oder eine Turbinenlaufschaufel ist.

6. Überwachungsgerät (10) zur Überwachung des Zustands einer Turbomaschinenkomponente (12), die einem oxidierenden und/oder korrosiven und/oder erosiven Gas ausgesetzt ist, umfassend
- mindestens eine Ladeschaltung, die mit der Komponente (12) elektrisch verbunden ist, zum elektrischen Aufladen der Komponente (12) bis zu einem festgelegten Pegel,
- eine Elektrode, die von der Komponente (12) elektrisch isoliert ist, und
- einen Strommonitor (24) zur Überwachung eines Stromflusses von der Komponente (12) zu der Elektrode (16) durch das Gas hindurch durch Überwachung des Stroms, der benötigt wird, um die Komponente (12) bis zu dem festgelegten Pegel aufzuladen.

7. Überwachungsgerät (10) nach Anspruch 6, wobei die Ladeschaltung eine Ladungszufuhreinheit (18) umfasst, welche dazu ausgebildet ist, die Komponente (12) bis zu einem eingestellten Pegel aufzuladen, und wobei der Strommonitor in der Ladeschaltung angeordnet ist.

8. Überwachungsgerät (10) nach Anspruch 6 oder 7, wobei die Turbomaschinenkomponente (12) eine Gasturbinenkomponente ist.

9. Überwachungsgerät (10) nach Anspruch 8, wobei die Gasturbinenkomponente eine Brennkammerkomponente, eine Turbinenleitschaufel oder eine Turbinenlaufschaufel ist.

10. Überwachungsgerät (10) nach Anspruch 9, wobei
- die Gasturbinenkomponente eine Turbinenleitschaufel (12) ist, welche durch mindestens eine erste Schiene (14) und mindestens eine zweite Schiene (16) gehalten wird,
- die Ladungszufuhreinheit (18) einen ersten Pol und einen zweiten Pol umfasst, wobei der erste Pol über die mindestens eine erste Schiene (14) mit der Turbinenleitschaufel (12) elektrisch verbunden ist, und
- die Elektrode von der mindestens einen zweiten Schiene (16) gebildet wird, wobei die zweite Schiene (16) mit dem zweiten Pol der Stromversorgungseinheit (18) verbunden oder geerdet ist und von der ersten Schiene (14) und der Turbinenleitschaufel (12) elektrisch isoliert ist.

11. Überwachungsgerät (10) nach Anspruch 10, wobei die zweite Schiene (16) von der Turbinenleitschaufel (12) durch eine keramische Beschichtung isoliert ist.

## Revendications

1. Procédé de surveillance de l'état d'un composant de turbomachine (12) exposé à un gaz oxydant et/ou corrosif et/ou érosif au cours du fonctionnement de la turbomachine, comprenant l'étape consistant à surveiller un flux de courant depuis le composant (12) via le gaz jusqu'à une électrode qui est isolée électriquement du composant (12),
**caractérisé en ce que**
le courant est surveillé en chargeant électriquement le composant (12) à un niveau déterminé, et en surveillant le courant nécessaire pour charger le composant (12) audit niveau déterminé.

2. Procédé selon la revendication 1, dans lequel l'électrode est chargée à la polarité opposée par rapport au composant (12).

3. Procédé selon la revendication 1, dans lequel l'électrode est mise à la masse.

4. Procédé selon l'une quelconque des revendications 1 à 3, dans lequel la turbomachine est une turbine à gaz et le composant de turbomachine (12) est un composant de turbine à gaz.

5. Procédé selon la revendication 4, dans lequel le composant de turbine à gaz est un composant de chambre de combustion, une aube de turbine ou une ailette de turbine.

6. Dispositif de surveillance (10) pour surveiller l'état d'un composant de turbomachine (12) exposé à un gaz oxydant et/ou corrosif et/ou érosif comprenant
- au moins un circuit de charge connecté électriquement au composant (12) pour charger électriquement le composant (12) à un niveau déterminé,
- une électrode qui est isolée électriquement du composant (12) et
- un moniteur de courant (24) pour surveiller un flux de courant depuis le composant (12) jusqu'à l'électrode (16) via le gaz en surveillant le courant nécessaire pour charger le composant (12) audit niveau déterminé.

7. Dispositif de surveillance (10) selon la revendication 6, dans lequel le circuit de charge comprend une unité d'approvisionnement en charge (18) qui est conçue de manière à charger le composant (12) à un niveau établi, et dans lequel le moniteur de courant est situé dans le circuit de charge.

8. Dispositif de surveillance (10) selon la revendication 6 ou 7, dans lequel le composant de turbomachine (12) est un composant de turbine à gaz.

9. Dispositif de surveillance (10) selon la revendication 8, dans lequel le composant de turbine à gaz est un composant de chambre de combustion, une aube de turbine ou une ailette de turbine.

10. Dispositif de surveillance (10) selon la revendication 9, dans lequel
- le composant de turbine à gaz est une aube de turbine (12) qui est maintenue par au moins un premier rail (14) et au moins un deuxième rail (16)
- l'unité d'approvisionnement en charge (18) comprend un premier pôle et un deuxième pôle, le premier pôle étant connecté électriquement à l'aube de turbine (12) via l'au moins un premier rail (14),
et
- l'électrode est formée par l'au moins un deuxième rail (16), le deuxième rail (16) étant connecté électriquement au deuxième pôle de l'unité d'approvisionnement en charge (18) ou mise à la masse et isolée électriquement du premier rail (14) et de l'aube de turbine (12).

11. Dispositif de surveillance (10) selon la revendication 10, dans lequel le deuxième rail (16) est isolé de l'aube de turbine (12) par un revêtement en céramique.
